# EUROPEAN PATENT APPLICATION

(11) **EP 4 757 146 A1**
(43) Date of publication of application: **10.06.2026**
(21) Application number: 24851724.5
(22) Date of filing: 31.07.2024
(51) Int. Cl.: H02K 15/06, B23K 9/00

(54) **WELDING METHOD AND JIG**

(30) Priority: 04.08.2023 JP 2023127590
(71) Applicant: NHK Spring Co., Ltd., Yokohama-shi, Kanagawa 236-0004 (JP)
(72) Inventor: ITO, Keiichi, Yokohama-shi, Kanagawa 236-0004 (JP)
(74) Representative: Oppermann, Frank
(86) International application number: PCT/JP2024/027420
(87) International publication number: WO 2025/033299

(57) **Abstract**

Provided is a welding method capable of suppressing variation in welding inside an assembly. The welding method that brings a conductive wire 15 and a terminal 17 inside an assembly 1 into contact with each other to be welded, drives a jig 19 operable from an outside of the assembly 1 to make contact between the conductive wire 15 and the terminal 17. The welding is performed between the conductive wire 15 and the terminal 17 while controlling driving force of the jig 19 to apply a predetermined pressing force.

## Description

### FIELD OF THE INVENTION

The present invention relates to a welding method and a jig used for a stator or the like of a rotating electrical machine.

### BACKGROUND OF THE INVENTION

As a conventional welding method, there is one disclosed in Patent Literature 1. In this welding method, bus bars of a stator of a rotating electrical machine have conductive wire connection portions as terminals, and two conductive wires of a coil are held to the conductive wire connection portions by caulking of side wall portions bent so as to surround the conductive wires, for example. In this holding state, the conductive wire connection portions and the conductive wires are joined by arc welding.

In the welding method disclosed in Patent Literature 1, a contact area and contact pressure between the conductive wires and the conductive wire connection portion may be varied due to variations in accuracy of each dimension, caulking steps or the like.

Generally, in welding, heat conduction is improved when two members are widely and strongly brought into contact with each other in a contact area and contact pressure. Namely, melting of a portion having improved heat conduction between the two members is preferentially started by welding. For this reason, if there is variation in the contact area and the contact pressure between the conductive wires and the conductive wire connection portion, a portion having, for example, a weak contact pressure or the like is insufficiently melted, to likely cause variation in welding.

On the other hand, if welding time is lengthened, all the welded portions are sufficiently melted. Inside the assembly such as the stator, there are, however, an insulating coating of a conductive wire or a coil and a peripheral resin material around the welded portions, and it is limited on the welding time from the viewpoint of thermostability.

### CITATION LIST

### PATENT LITERATURE

PATENT LITERATURE 1: JP 5417721 B

### SUMMARY OF THE INVENTION

### PROBLEMS TO BE SOLVED BY THE INVENTION

The problem to be solved is that it is likely to cause variation in welding inside an assembly.

### MEANS FOR SOLVING THE PROBLEM

The present invention provides a welding method that brings a conductive wire of a coil and a terminal of a bus bar inside an assembly into contact with each other to be welded. This welding method drives a jig from an outside of the assembly to bring one of the conductive wire of the coil and the terminal of the bus bar into contact with the other of the conductive wire of the coil and the terminal of the bus bar with pressing force by the jig, and performs the welding while controlling driving force of the jig to set the pressing force within a predetermined range.

The present invention also provides a jig used for the welding method. This jig is provided with a base member supporting the assembly, a movable body provided movably with respect to the base member, a pressing portion provided on the movable body and oriented to one of the conductive wire of the coil and the terminal of the bus bar with interposition of the other of the conductive wire of the coil and the terminal of the bus bar, and a driving unit configured to move the movable body to bring the other of the conductive wire of the coil and the terminal of the bus bar into contact with the one of the conductive wire of the coil and the terminal of the bus bar by the pressing force using the pressing portion. The driving unit is configured to set the pressing force within the predetermined range by controlling the driving force of the movable body.

### EFFECT OF THE INVENTION

According to the present invention, it is possible to suppress variation in welding inside an assembly.

### BRIEF DESCRIPTION OF THE DRAWINGS

[FIG. 1] FIG. 1 is a perspective view of a stator according to an embodiment.
[FIG. 2] FIG. 2 is a perspective view illustrating a jig supporting the stator of FIG. 1.
[FIG. 3] FIG. 3 is an exploded perspective view illustrating the stator and the jig of FIG. 1.
[FIG. 4] FIG. 4 is a sectional view illustrating the jig of FIG. 2.
[FIG. 5] FIG. 5 is an enlarged plan view of part of the jig of FIG. 2.
[FIG. 6] FIG. 6 is an enlarged sectional view of part of the jig of FIG. 2.
[FIG. 7] FIG. 7 is an enlarged plan view of part of FIG. 5.

### EMBODIMENT FOR CARRYING OUT THE INVENTION

The object of suppressing variation in welding inside an assembly is accomplished by bringing a conductive wire of a coil and a terminal of a bus bar to be welded into contact with each other using a jig at a predetermined pressing force.

The welding method brings a conductive wire 15 of a coil 7 and a terminal 17 of a bus bar 9 inside an assembly 1 into contact with each other to be welded. This welding method drives a jig 19 from an outside of the assembly 1 to bring one 17 of the conductive wire 15 and the terminal 17 into contact with the other 15 of the conductive wire 15 and the terminal 17 with the pressing force of the jig 19. The welding is performed while controlling the driving force of the jig 19 to set the pressing force within a predetermined range.

The conductive wire 15 and the terminal 17 inside the assembly 1 to be welded may be a conductive wire and a terminal of a bus bar of a rotating electrical machine or a power electronics device.

In one embodiment, the assembly 1 may be an assembly used for a rotating electrical machine.

The pressing of the conductive wire 15 may be performed at a position shifted from a contact portion between the conductive wire 15 and the terminal 17 in an axial direction of the conductive wire 15, to bring the conductive wire 15 into contact with the terminal 17.

An end edge of the terminal 17 may be provided with an end edge recess 17a for positioning the conductive wire 15. In this case, the conductive wire 15 comes into contact with the terminal 17 at the end edge recess 17a.

The number of the conductive wires 15 to be welded to the terminal 17 is not particularly limited. As an embodiment, the conductive wires 15 may be brought into contact with the terminal 17 at the predetermined pressing force in a state that at least two conductive wires are arranged in parallel.

The jig 19 used for this welding method is provided with a base member 21, a movable body 23, a pressing portion 25, and a driving unit 27. The base member 21 supports the assembly 1. The movable body 23 is provided movably with respect to the base member. The pressing portion 25 is provided on the movable body 23 and is oriented to one of the conductive wire 15 and the terminal 17 with interposition of the other of the conductive wire 15 and the terminal 17. The driving unit 27 moves the movable body 23 to bring the other of the conductive wire 15 and the terminal 17 into contact with one of the conductive wire 15 and the terminal 17 by the pressing force of the pressing portion 25. Then, the driving unit 27 allows the pressing force to be set in the predetermined range by controlling the driving force of the movable body 23.

Although the pressing portion 25 is provided with an appropriate shape, the pressing portion may be provided with, as an embodiment, a pressing face 53c formed in a recessed shape with respect to the conductive wire 15.

Further, although the pressing portion 25 may be integrally or separately provided to the movable body 23, the pressing portion may be configured to be separated from and replaceably supported by the movable body 23.

The movable body 23 may be provided with a slide portion 45 and a pressing force transmission portion 47. The slide portion 45 is connected with the driving unit 27 and moves along the base member 21. The pressing force transmission portion 47 is integrally provided with the slide portion 45 and is connected to the pressing portion 25.

In one embodiment, the driving unit 27 may include a drive bolt 49. The drive bolt 49 passes through the base member 21 in a radial direction and is provided with a radially inner portion screwed to the movable body 23 and a radially outer portion projecting from the base member 21 so as to be rotatably operable around an axis.

The base member 21 may be provided with a cover 37 via a stud portion 35. The stud portion 35 is stood on the base member 21 and the cover 37 covers the coil 7 and the bus bar 9. The cover 37 is provided with a work window 41 that exposes the terminal 17 and the conductive wire 15.

### EMBODIMENT

### [Stator]

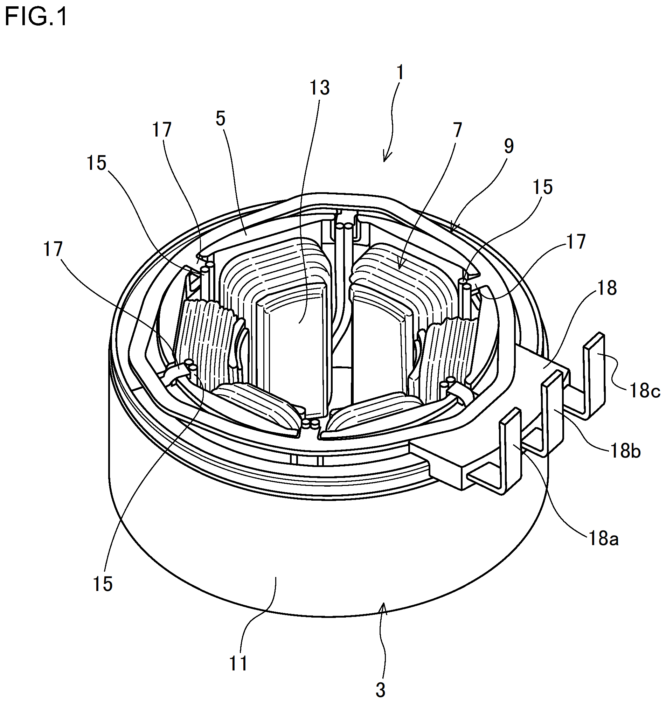

FIG. 1 is a perspective view according to an example of a stator.

A stator 1 of FIG. 1 forms a rotating electrical machine together with a rotor (not illustrated). The rotating electrical machine is configured as, for example, a 3-phase (U-phase, V-phase, and W-phase) AC motor. In addition, in the following description, a radial direction, a circumferential direction, and an axial direction are a radial direction, a circumferential direction, and an axial direction of the stator 1.

The stator 1 is provided with a stator core 3, an insulator 5, a coil 7, a bus bar 9, and the like. The stator 1 is an example of an assembly of the present embodiment and may also employ other configurations. Further, the assembly is not limited to the stator 1 that is the assembly of the rotary electric machine and may be of a power electronics device or the like.

The stator core 3 is formed by stacking, for example, a plurality of annular electromagnetic steel sheets. The stator core 3 has a yoke 11 and teeth 13, and is covered with an insulator 5 as mentioned above. Each of the teeth 13 is wound with a conductive wires 15 covered with an insulating film, and the wound conductive wires 15 form a coil 7. The conductive wires 15 of the present embodiment have a circular cross section.

The bus bars 9 are conductive members for supplying a three-phase drive current to the coil 7. The bus bar 9 of each phase is appropriately routed on the insulator 5 from the connector 18 and is connected to the coil 7. The bus bars 9 are, therefore, provided with terminals 17 for connection to the coil 7.

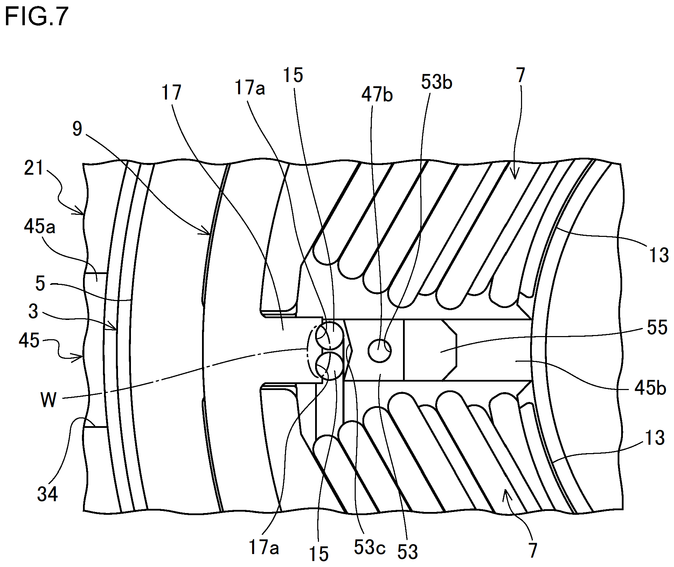

The terminal 17 is extended radially inward from the bus bar 9 and projected in a plate shape having a width in the circumferential direction. An inner end edge of the terminal 17 in the radial direction is joined to a terminal portion of the conductive wire 15 of the coil 7 by a welded portion W (see FIG. 7). Respective ends of the bus bar 9 are disposed as three-phase connector terminals 18a, 18b, and 18c in a connector 18.

### [Welding method]

A welding method of the present embodiment welds the conductive wire 15 of the coil 7 of the starter 1 and the terminal 17 of the bus bar 9. During this welding, the conductive wire 15 is brought into contact with the terminal 17 by the jig 19.

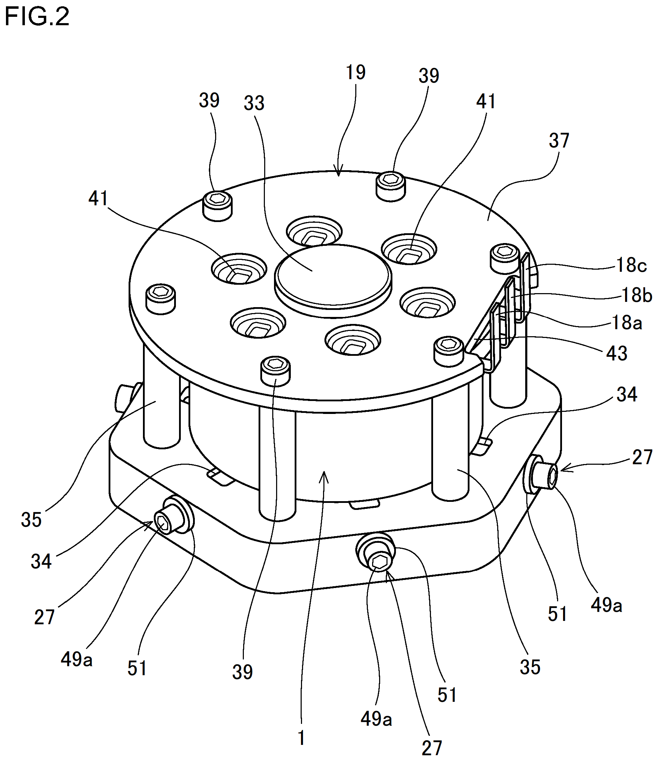

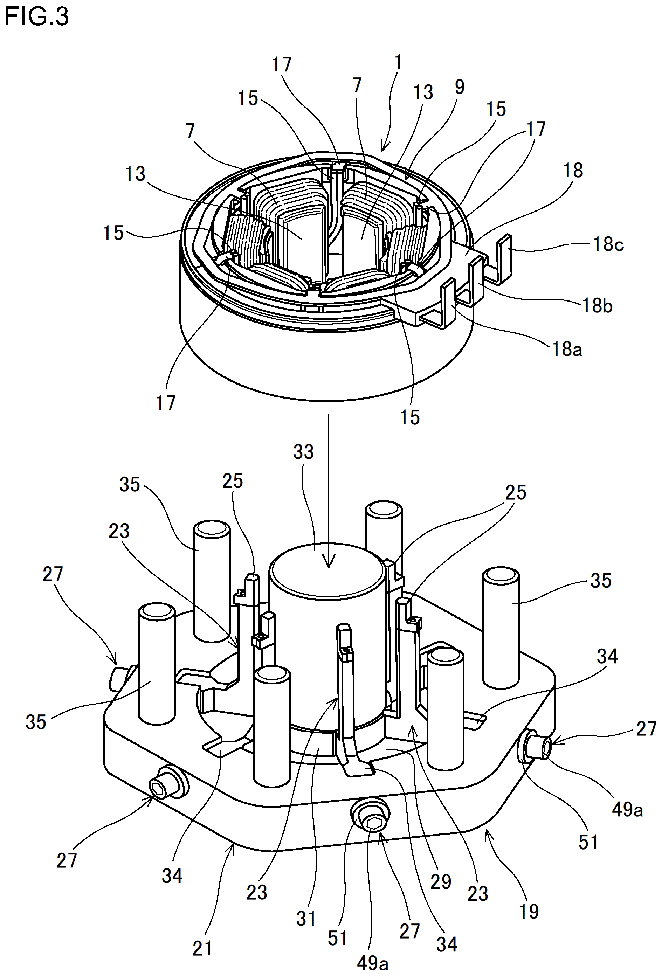

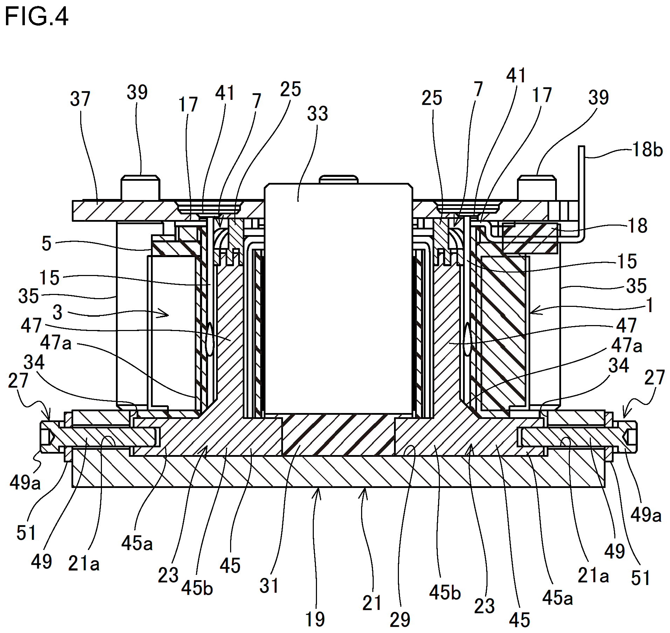

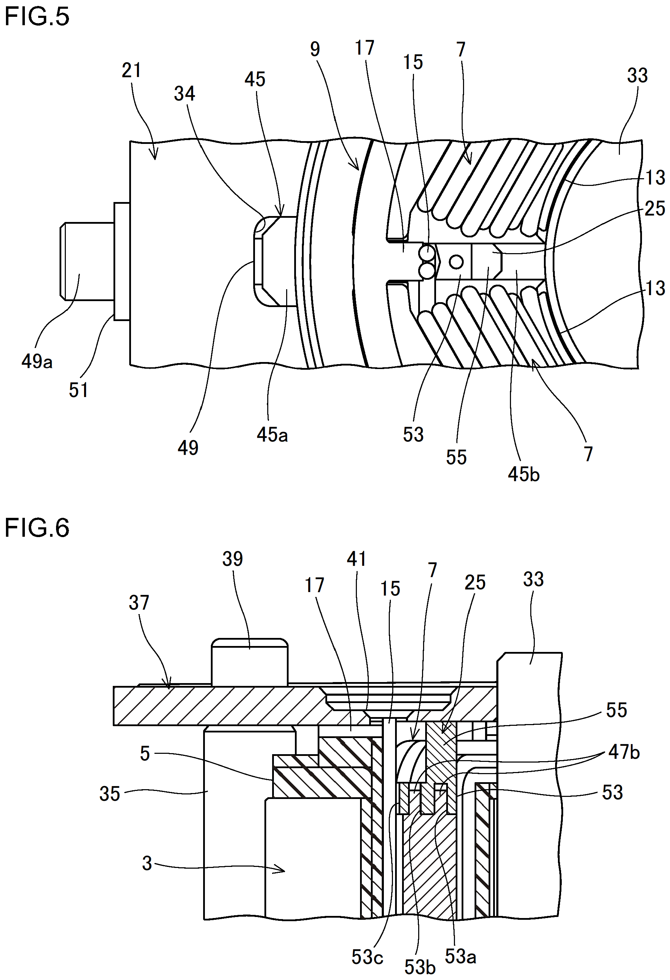

FIG. 2 is a perspective view illustrating a jig 19 supporting the stator 1 of FIG. 1. FIG. 3 is an exploded perspective view illustrating the stator 1 and the jig 19 of FIG. 2 with omission of a cover 37. FIG. 4 is a sectional view of the jig 19 of FIG. 2. FIG. 5 is an enlarged plan view illustrating part of the jig 19 of FIG. 2 with omission of the cover 37.

As illustrated in FIGS. 2 to 5, the jig 19 used for the welding method of the present embodiment forms a jig that is drivable from an outside of the stator 1. The jig 19 driven brings the conductive wire 15 of the coil 7 into contact with the terminal 17 of the bus bar 9 with pressing force, and the pressing force is set to a predetermined range by controlling driving force. In the present embodiment, the jig 19 is provided with a base member 21, a movable body 23, a pressing portion 25, and a driving unit 27.

The base member 21 supports the stator 1 on one side in the axial direction. The base member 21 of the present embodiment is formed in a plate shape, and has a hexagonal planar shape. The shape of the base member 21 is, however, not particularly limited. A recessed portion 29 is formed in a central portion of the base member 21. The recessed portion 29 has a recessed shape in a thickness direction of the base member 21, an upper side of which is open. The upper side in this context is an upper side in the drawing, and is not necessarily one in the vertical direction.

In the present embodiment, the thickness direction of the base member 21 coincides with the axial direction of the stator 1. In addition, the central portion of the base member 21 is a portion excluding an outer peripheral portion of the base member 21. Although the planar shape of the recessed portion 29 is not particularly limited, the planar shape is circular in the present embodiment.

A core metal 33 is disposed via a spacer 31 in the central portion that is the portion excluding the outer peripheral portion of the recessed portion 29. The outer peripheral portion of the recessed portion 29 is a circumferential portion surrounding the spacer 31. A plurality of groove-shaped recessed portions 34 are formed in the outer peripheral portion of the recessed portion 29. Similarly to the recessed portion 29, each groove-shaped recessed portion 34 has a recessed shape in the thickness direction of the base member 21, an upper side of which is open. The groove-shaped recessed portion 34 has a groove shape extending outward in the radial direction with respect to the wall portion defining the recessed portion 29 in a plan view. The plurality of the groove-shaped recesses 34 are disposed at intervals in the circumferential direction.

A width of the groove-shaped recess 34 in the circumferential direction corresponds to a width of a slide portion 45 of the movable body 23. A depth of the groove-shaped recess 34 is the same as a depth of the recessed portion 29. An insertion hole 21a formed in the base member 21 communicates with the groove-shaped recess 34 in the radial direction. The insertion hole 21a passes along the radial direction from an outer surface of the base member 21 in the radial direction to the groove-shaped recess 34.

A stud boss 35 is stood as a stud portion on the base member 21. Although the installation position and the number of the stud bosses 35 are not particularly limited, in the present embodiment, six stud bosses 35 are arranged so as to correspond to respective corner portions of the planar shape of the base member 21.

The stud bosses 35 support a cover 37 covering the coil 5 and the bus bar 9 at tips. Through holes (not illustrated) corresponding to the stud bosses 35 are formed in the cover 37. Bolts 39 are fastened to respective female screws of the stud boss 35 that are not illustrated via the through holes. The cover 37 is attached and detached by the bolts 39.

In addition, the stud portion should be a columnar shape that supports the cover 37 and it may be configured that a stud bolt is attached to the stud boss 35. In this case, a nut is used instead of the bolt 39. Further, a bolt, a nut, and the like may not be used as long as the cover 37 is fixed.

The cover 37 is formed in a plate shape, a disk shape in the present embodiment that covers the coil 7 and the bus bar 9. The planar shape of the cover 37 is, however, not particularly limited. The cover 37 is provided with a work window 41 to expose the terminal 17 and the conductive wire 15 and a notch 43 for the connector.

In the present embodiment, the work window 41 is formed at each of six places. The work window 41 has a sectional shape broading from the terminal 17 and the conductive wire 15 side toward an outer surface of the cover 37 in the thickness direction. Although the sectional shape of the work window 41 is not particularly limited, in the embodiment, the work window 41 is broaded in a step shape.

Although the cover 37 suppresses influence of heat during welding to the stator 1, the cover may be omitted.

The movable body 23 is provided movably with respect to the base member 21. In the present embodiment, the movable bodies 23 are provided on the base member 21. The movable body 23, however, should be configured to be movable with respect to the base member 21 and does not need to be provided on the base member 21.

The movable bodies 23 are disposed along the groove-shaped recessed portions 34, respectively and are movable along the radial direction. The moving direction of the movable body 23 is, however, appropriately set according to a contact direction of the conductive wire 15 of the coil 7 and the terminal 17 of the bus bar 9.

Each of the movable bodies 23 of the present embodiment is provided with a slide portion 45 and a pressing force transmission portion 47.

The slide portion 45 is connected with the driving unit 27 to move along the base member 21. In the slide portion 45, a base portion 45a on an outer side in the radial direction is formed to have a relatively wide width.

The width of the base portion 45a in the circumferential direction corresponds to the width of the groove-shaped recessed portion 34. The base portion 45a is fitted into the groove-shaped recessed portion 34 and is guided along the groove-shaped recessed portion 34. A tip portion 45b of the slide portion 45 on an inner side in the radial direction is projected toward the spacer 31 and is located below a bottom surface of the core metal 33. The slide portion 45 is, therefore, stably moved in the radial direction.

The pressing force transmission portion 47 is formed in a columnar shape and is stood from the slide portion 45 in the axial direction. A gradient portion 47a is formed between the pressing force transmission portion 47 and the slide portion 45. The pressing force transmission portion 47 supports the pressing portion 25 so that the pressing portion 25 is provided on the movable body 23.

The pressing portion 25 is oriented to the terminal 17 inward in the radial direction with interposition of the conductive wire 15 in a plan view. The pressing portion 25 of the present embodiment is supported by a tip end of the pressing force transmission portion 45. The pressing portion 25, however, may be supported at an intermediate portion or the like of the pressing force transmission portion 45 in the axial direction.

The pressing portion 25 is in relatively movably contact with a lower surface of the cover 37. The pressing portion 25, however, may be separated away from the lower surface of the cover 37. Details of the pressing portion 25 will be explained later.

The driving unit 27 is connected with the movable body 23 to move the movable body 23. With the movement of the movable body 23, the pressing portion 25 presses the conductive wire 15 against the terminal 17 to bring the conductive wire into contact with the terminal.

In the present embodiment, the driving unit 27 is provided with a plurality of drive bolts 49. Each drive bolt 49 passes through the base member 21 via the insertion hole 21a in the radial direction. The drive bolt 49 passes the base member 21 inside and outside in the radial direction and has a radially inner portion screwed to the movable body 23 and a radially outer portion projecting from the base member 21 so as to be rotatably operable around an axis.

In the present embodiment, the radially outer portion of the drive bolt 49 is provided with the head portion 49a, and the head portion 49a is arranged to be projected outward from the base member 21 in the radial direction. A washer 51 is interposed between the head portion 49a and the outer surface of the base member 21. The head portion 49a is rotatably operable around the axis using a tool or a device.

The driving unit 27, therefore, moves the movable bodies 23 in the radial direction by rotation of the drive bolts 49.

It should be noted that the drive bolt 49 may be screwed to the base member 21 and relatively rotatably engaged with the movable body 23. In this case, the drive bolt 49 moves in the radial direction in accordance with rotating operation around the axis to move the movable body 23. The head portion 49a of the drive bolt 49 may be omitted and the drive bolt should be rotationally operable around the axis using a tool or a device in a range projecting from the base member 21.

With controlling driving force for moving the movable body 23, the driving unit 27 brings the conductive wire 15 into contact with the terminal 17 with a predetermined pressing force by the pressing portion 25. In the present embodiment, the contact of the conductive wire 15 with the terminal 17 is performed with the predetermined pressing force by controlling tightening torque of the drive bolt 49 as the driving force.

It should be noted that the driving unit 27 may be another linear actuator using, for example, a fluid pressure, a solenoid force, or the like.

FIG. 6 is an enlarged sectional view illustrating part of the jig 19 of FIG. 2. FIG. 7 is an enlarged plan view of part of FIG. 5.

As illustrated in FIGS. 6 and 7, each pressing portion 25 is provided with an electric-wire-facing portion 53 and a cover-contact portion 55. The cover-contact portion 55 is projected from the electric-wire-facing portion 53 in the axial direction. The electric-wire-facing portion 53 is formed in a plate shape or a block shape and is provided with a plurality of hole portions 53a and 53b and a pressing face 53c. The plurality of the hole portions 53a and 53b are arranged side by side in the radial direction.

The hole portions 53a and 53b are provided along the axial direction and fitting pins 47b at the tip of the pressing force transmission portion 47 are fitted and inserted thereto in the axial direction. With this fitting, the pressing portion 25 is supported so as to be replaceable with respect to the movable body 23.

In addition, the hole portion 53a is recessed with respect to the electric-wire-facing portion 53 and the hole portion 53b passes through the electric-wire-facing portion 53 in the axial direction. The replaceable support of the pressing portion 25 is realized by various structures such as screwing in addition to fitting. Further, the pressing portion 25 may be formed integrally with the movable body 23.

The pressing face 53c is a face that comes into contact with the conductive wire 15 and presses the conductive wire 15. The pressing face 53c of the present embodiment is oriented outward in the radial direction. The pressing face 53c is disposed at a position shifted toward the base member 21 in the axial direction relative to a contact portion between the terminal 17 and the conductive wire 15.

The pressing face 53c of the present embodiment is formed in a recessed shape with respect to the conductive wire 15 in a plan view. In particular, the pressing face 53c is composed of a pair of inclined faces that transition from a central portion to both sides in the circumferential direction toward the conductive wire 15. The pressing face 53c, however, may have a recessed shape formed by a curved surface or may be formed by a flat face or the like.

The pressing face 53c holds the conductive wires 15 when the pair of conductive wires 15 are pressed by the pair of inclined surfaces. In the present embodiment, the conductive wires 15 are held while applying a force to make the pair of conductive wires 15 be close inward in the circumferential direction.

It should be noted that the shape of the pressing face 53c may be formed on the terminal 17. In addition, a shape of an end edge recess 17a may be formed on the electric-wire-facing portion 53. One or both of the electric-wire-facing portion 53 and the end edge of the terminal 17 may be linearly formed orthogonal to the radial direction in a plan view.

When using this jig, the stator 1 before welding is placed on the inside of the stud bosses 35 on the base member 21 as illustrated in FIG. 3. In this placement, the pressing portions 25 of the jig 19 are disposed so as to be directed to the terminals 17 via the conductive wires 15 in the radial direction in a plan view.

Next, the cover 37 is attached to the tips of the stud bosses 35. Namely, the cover 37 is placed on the tips of the stud bosses 35 and the bolts 39 are fastened to the female screw portions of the stud bosses 35 through the through holes of the cover 37, respectively. In this state, the terminal 17 and the conductive wires 15 are exposed to each work window 41 of the cover 37.

Then, the conductive wires 15 are brought into contact with the terminal 17. In particular, rotationally driving the head portion 49a of each drive bolt 49, the slide portion 45 of the movable body 23 screwed according to the rotation of the drive bolt 49 is pulled outward in the radial direction to be moved. The rotational drive of the head portion 49a is automatically performed by a device such as a robot or is manually performed by a tool.

The movement of the movable body 23 causes the pressing force transmission unit 47 to move in the same direction. With this, the electric-wire-facing portion 53 of the pressing portion 25 presses the conductive wires 15 with the pressing face 53c. According to this pressing, the pair of the conductive wires 15 are brought into contact with the terminal 17. The contact is performed by pressing the pair of the conductive wires 15 against end edge recesses 17a of the terminal 17, respectively. In the present embodiment, when the pressing portion 25 presses the conductive wires 15, the pair of inclined surfaces of the pressing face 53c also press the pair of the conductive wires 15 inward in the circumferential direction, to position the conductive wires 15, respectively.

Each end edge recess 17a with which the conductive wire 15 comes into contact is formed in the terminal 17 with an arc having substantially the same curvature as an outer peripheral face of the conductive wire 15. Although the outer peripheral surfaces of the conductive wires 15 accommodated in the end edge recesses 17a are slightly separated in the circumferential direction, they may be in contact. It should be noted that the end edge recesses 17a may be omitted. In addition, the shape of the end edge recesses 17a may be provided on the pressing face 53c.

With the pressing, the conductive wires 15 receive the pressing force and come into contact with the terminal 17. At this time, the pressing of the conductive wire 15 is performed at a position shifted from the contact portion between the conductive wire 15 and the terminal 17 in the axial direction of the conductive wire 15. The conductive wire 15, therefore, comes into contact with the terminal 17 with its own elasticity according to the pressing force of the jig 19.

The pressure of the contact of the conductive wire 15 is surely received by the terminal 17 in a planar direction of the plate shape.

As a result, it is possible to accurately keep the pressing force with respect to the terminal 17 via the conductive wire 15 by the pressing portion 25.

The pressing force is increased upto a predetermined value by controlling the tightening torque that is the driving force of the head portion 49a. The predetermined pressing force is, for example, a pressing force generating a contact pressure suitable for the arc welding in the contact area between the conductive wire 15 and the terminal 17. The suitability is a degree in which sufficiently melting of the conductive wire 15 is performed, and is appropriately set according to types of the welding method and members to be welded.

In the present embodiment, the tightening torque increases due to the elasticity of the conductive wires 15 in accordance with the tightening of the drive bolt 49. By controlling the tightening torque, the pressing force of the jig 19 for bringing the conductive wire 15 into contact with the terminal 17 is set to the predetermined value range.

After the pressing force is set to the predetermined range in this way, welding is performed on the conductive wires 15 and the terminal 17 in each work window 41. In the present embodiment, arc welding is performed. The welding, however, may be resistance welding.

In the arc welding, the coil 7 side is grounded and the conductive wires 15 are on a negative voltage side via the coil 7. A torch comes into contact through the work window 41 to perform the arc welding between the terminal 17 and the conductive wires 15. A position of the torch is a periphery of the contact portion between the terminal 17 and the conductive wires 15. In addition, the torch may not be brought into contact with the terminal 17 or the conductive wires 15.

With this arc welding, a welded portion W is formed to join portions contact between the terminal 17 and the conductive wires 15. At this time, since the pair of the conductive wires 15 are uniformly in contact with the terminal 17 at the predetermined pressing force, uniformly and sufficiently melting is performed.

As mentioned above, the welding method of the present embodiment drives the jig 19 operable from the outside of the stator 1 to make contact between the conductive wire 15 and the terminal 17. Then, the welding is performed while controlling the driving force of the jig 19 to apply the predetermined pressing force between the conductive wire 15 and the terminal 17.

There is, therefore, no variation in the contact area and the contact pressure between the conductive wire 15 and the terminal 17, to stabilize welding quality. In the present embodiment, the welding quality is stabilized uniformly at the plurality of welding points, to stabilize performance of the stator 1.

Further, in the state that the two conductive wires 15 are arranged in parallel in each welded portion, the two conductive wires are uniformly brought into contact with the terminal 17 at the predetermined pressing force and welded thereto. The welding quality is, therefore, stabilized by suppressing the variation in the welding of the respective conductive wires 15.

The pressing of the conductive wire 15 is performed at the position shifted from the contact portion between the conductive wire 15 and the terminal 17 in the axial direction of the conductive wire 15, and the conductive wire 15 is brought into contact with the terminal 17 by elasticity.

The driving force of the jig 19 is, therefore, surely increased in response to the increase in the pressing force for bringing the conductive wire 15 into contact with the terminal 17, to easily and surely control the pressing force.

The conductive wire 15 is positioned in the end edge recess 17a of the terminal 17, to easily uniform the contact area and the contact pressure of the conductive wire 15 with respect to the terminal 17 and more surely stabilize the welding quality.

In the jig 19 used for the welding method of the embodiment of the present invention, the stator 1 is supported by the base member 21, the movable body 23 is moved by the rotational drive of the head portion 49a of the driving unit 27, and the conductive wire 15 is brought into contact with the terminal 17 by the pressing portion 25.

At this time, the jig 19 performs the contact between the conductive wire 15 and the terminal 17 with the predetermined pressing force by controlling the driving force of the movable body 23. By welding the conductive wire 15 and the terminal 17 in this contact state, the variation in welding is, therefore, suppressed to stabilize the welding quality.

The pressing face 53c is formed into the recessed shape with respect to the conductive wire 15, so that the pressing portion 25 position the conductive wire 15 with respect to the end edge of the terminal 17.

It is, therefore, possible to suppress the variation in welding to more surely stabilize the welding quality.

In the present embodiment, the pressing portion 25 is replaceable relative to the movable body 23, so that the welding quality is easily stabilized by repair and replacement of the pressing portion 25.

In the movable body 23, the slide portion 45 connected with the driving unit 27 is accurately moved along the base member 21. With this movement, the force is accurately transmitted to the pressing portion 25 via the pressing force transmission portion 47 to accurately apply the predetermined pressing force to the conductive wire 15.

In the driving unit 27, the head portion 49a of the drive bolt 49 is rotatably operated around the axis on the radial outside of the base member 21, to surely transmit the drive force to the pressing portion 25 located on the radial inside of the stator 1.

### DESCRIPTION OF NUMERALS

- 1: STATOR
- 3: STATOR CORE
- 7: COIL
- 9: BUS BAR
- 13: TEETH
- 15: CONDUCTIVE WIRE
- 17: TERMINAL
- 17a: END EDGE RECESS
- 19: JIG
- 21: BASE MEMBER
- 23: MOVABLE BODY
- 25: PRESSING PORTION
- 27: DRIVING UNIT
- 35: STUD BOSS (STUD PORTION)
- 37: COVER
- 41: WORK WINDOW
- 5: SLIDE PORTION
- 47: PRESSING FORCE TRANSMISSION UNIT
- 49: DRIVE BOLT
- 49a: HEAD PORTION
- 53: ELECTRIC-WIRE-FACING PORTION
- 53c: PRESSING FACE
- W: WELDED PORTION

## Claims

1. A welding method that brings a conductive wire of a coil and a terminal of a bus bar inside an assembly into contact with each other to be welded, comprising:
driving a jig from an outside of the assembly to bring one of the conductive wire and the terminal into contact with the other of the conductive wire and the terminal with pressing force by the jig; and
performing the welding while controlling driving force of the jig to set the pressing force within a predetermined range.

2. The welding method according to claim 1, wherein
the assembly is an assembly used for a rotating electrical machine.

3. The welding method according to claim 1, wherein
the conductive wire is pressed by the jig at a position shifted from a contact portion between the conductive wire and the terminal in an axial direction of the conductive wire, to bring the conductive wire into contact with the terminal.

4. The welding method according to claim 1, wherein
an end edge of the terminal includes an end edge recess for positioning the conductive wire, and
the contact of the conductive wire is performed to the end edge recess.

5. The welding method according to any one of claims 1 to 4, wherein
at least two of the conductive wires are arranged in parallel to be brought into contact with the terminal with the predetermined pressing force.

6. A jig for use for the welding method of claim 1, comprising:
a base member supporting the assembly;
a movable body provided movably with respect to the base member;
a pressing portion provided on the movable body and oriented to one of the conductive wire of the coil and the terminal of the bus bar with interposition of the other of the conductive wire of the coil and the terminal of the bus bar; and
a driving unit configured to move the movable body to press the other of the conductive wire of the coil and the terminal of the bus bar to the one of the conductive wire of the coil and the terminal of the bus bar by the pressing force using the pressing portion, wherein
the driving unit is configured to set the pressing force within the predetermined range by controlling a driving force of the movable body.

7. The jig of claim 6, wherein
the pressing portion is provided with a pressing face formed in a recessed shape with respect to the conductive wire.

8. The jig of claim 6, wherein
the pressing portion is supported so as to be replaceable with respect to the movable body.

9. The jig of claim 6, wherein
the movable body is provided with a slide portion connected with the driving unit to move along the base member and a pressing force transmission portion integrally provided on the slide portion and connected to the pressing portion.

10. The jig of claim 6, wherein
the drive unit is provided with a drive bolt, and
the drive bolt passes through the base member in a radial direction and is provided with a radially inner portion screwed to the movable body and a radially outer portion projecting from the base member so as to be rotatably operable around an axis.

11. The jig according to any one of claims 6 to 10, wherein
a stud portion is stood on the base member,
the stud portion supports a cover covering the coil and the bus bar, and
the cover is provided with a work window that exposes the terminal and the conductive wire.
